# EUROPEAN PATENT SPECIFICATION

(11) **EP 2 790 502 B1**
(45) Date of publication and mention of the grant of the patent: **19.07.2017**
(21) Application number: 12794922.0
(22) Date of filing: 23.11.2012
(51) Int. Cl.: A01N 25/30, A01N 41/06, A01N 41/10, A01N 43/653, A01N 43/90, A01N 45/02, A01N 47/36, A01P 3/00, A01P 13/00, A01P 5/00, A01P 7/00

(54) **AROMATIC PHOSPHATE ESTERS AS AGROCHEMICAL FORMULATION COMPONENT**
AROMATISCHE PHOSPHATESTER ALS KOMPONENTE EINER AGROCHEMISCHEN FORMULIERUNG
ESTERS DE PHOSPHATE AROMATIQUES EN TANT QUE COMPOSANT DE FORMULATION AGROCHIMIQUE

(30) Priority: 12.12.2011 GB 201121377
(43) Date of publication of application: 22.10.2014
(73) Proprietor: Syngenta Limited, Guildford, Surrey GU2 7YH (GB)
(72) Inventor: BELL, Gordon Alastair, Bracknell, Berkshire RG42 6 EY (GB); TAYLOR, Philip, Bracknell, Berkshire RG42 6EY (GB)
(74) Representative: Syngenta International AG
(86) International application number: PCT/EP2012/073451
(87) International publication number: WO 2013/087395

(56) References cited:
- EP-A2- 1 018 299
- WO-A2-2008/049618

## Description

This invention relates to the use of aromatic phosphate esters as adjuvants in compositions, particularly for agrochemical use, as well to compositions comprising such an aromatic phosphate ester, in combination with at least one agrochemical and optionally at least one surfactant. The invention further extends to methods of making and using such compositions. In particular the present invention relates to such compositions when formulated as, or comprised by, an emulsion concentrate (EC).

The efficacy of the active ingredients (Als) in an agrochemical composition can often be improved by the addition of further ingredients. The observed efficacy of the combination of ingredients can sometimes be significantly higher than that which would be expected from the individual ingredients used (synergism). An adjuvant is a substance which can increase the biological activity of an Al but is itself not significantly biologically active. The adjuvant is often a surfactant, and can be included in the formulation or added separately, e.g. by being built into emulsion concentrate formulations, or as tank mix additives.

In addition to the effect on biological activity, the physical properties of an adjuvant are of key importance and must be selected with a view to compatibility with the formulation concerned. For instance, it is generally simpler to incorporate a solid adjuvant into a solid formulation such as a water-soluble or water-dispersible granule. In general adjuvants rely on surfactant properties for biological activity enhancement and one typical class of adjuvants involves an alkyl or aryl group to provide a lipophilic moiety and a (poly)ethoxy chain to provide a hydrophilic moiety. Much has been published on the selection of adjuvants for various purposes, such as Hess, F.D. and Foy, C.L., Weed technology 2000, 14, 807-813.

The present invention is based on the discovery that aromatic phosphate esters of formula 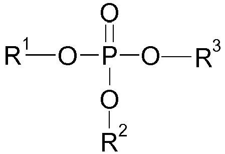 wherein
R¹ is optionally substituted phenyl, R² is optionally substituted phenyl and R³ is C₇-C₂₀ alkyl, are surprisingly effective adjuvants, significantly enhancing the biological activity of agrochemical active ingredients. Such aryl phosphate esters have in the past typically found utility as flame retardant plasticizers, as well as anti-wear or extreme-pressure additives in lubricants.

US2927014 discloses phosphonate and phospinate compounds for use as herbicides. WO 93/04585 discloses alkyl phosphonate esters and alkyl phosphinates esters for use as adjuvants in herbicidal compositions. WO 03/0999012 also discloses specific alkyl phosphonates as well as aryl phosphonate esters generically for use as adjuvants in insecticidal compositions. WO 98/00021 discloses the use of 2-ethylhexyl phenyl tetradecylphosphinate and 2-ethylhexyl phenyl octadecyl phosphinate as adjuvants for the fungicide fluquinconazole.

EP1018299 and EP0579052 both describe the use of alkyl phosphate esters as "accelerator adjuvants" for herbicidal compositions. WO 00/56146 describes the use of organic esters of orthosphosphoric acid as surfactants/solvents suitable for stabilisation and controlling crystallisation in liquid formulations of herbicides. WO 03/105588 discloses the use of *inter alia* organic, more specifically alkyl, phosphate esters as adjuvants for metal chelates of mesotrione. US2011/0098178 describes a liquid herbicidal composition containing pinoxaden and an adjuvant, where the adjuvant is a built-in adjuvant consisting of a triester of phosphoric acid with aliphatic or aromatic alcohols and/or a bis-ester of alkyl phosphonic acids with aliphatic or aromatic alcohols. US6,627,595 discloses the use as solvents in agrochemical formulations, of triesters of phosphoric acid with various alcohols.

However, none of the above prior art specifically discloses the use of aryl phosphate esters as dislosed herein as adjuvants,or more specifically as a bioefficacy adjuvant, in agrochemical compositions.

Thus in a first aspect the present invention provides agrochemical composition wherein the composition is an emulsion concentrate (EC), an emulsion in water (EW), a microcapsule formulation (CS), dispersion concentrate (DC), suspension of particles in an emulsion (SE), or a suspension of particles in oil (OD) comprising:
i. an agrochemical active ingredient;
ii. a surfactant;
iii. an aromatic phosphate ester of formula (I) 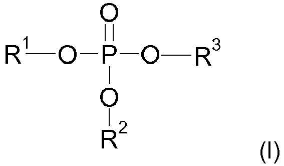 wherein
   R¹ is phenyl or phenyl substituted with one, two or three groups independently selected from a C₁-C₄ branched chain alkyl group or a C₁-C₄ straight chain alkyl group, R² is phenyl or phenyl substituted with one, two or three groups independently selected from a C₁-C₄ branched chain alkyl group or a C₁-C₄ straight chain alkyl group, and R³ is C₇-C₂₀ alkyl.

In a second aspect the invention provides a liquid agrochemical composition comprising:
i. an agrochemical active ingredient;
ii. a surfactant;
iii. from 0.05% to 5% v/v of an aromatic phosphate ester of formula (I) 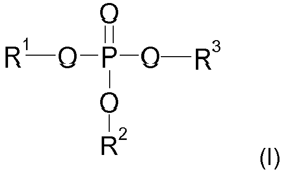 R¹ is phenyl or phenyl substituted with one, two or three groups independently selected from a C₁-C₄ branched chain alkyl group or a C₁-C₄ straight chain alkyl group, R² is phenyl or phenyl substituted with one, two or three groups independently selected from a C₁-C₄ branched chain alkyl group or a C₁-C₄ straight chain alkyl group, and R³ is C₇-C₂₀ alkyl.

In a third aspect the invention provides for the non-therapeutic use of an agrochemical composition as described herein to control pests.

In a further aspect there is provided a non-therapeutic method of controlling a pest, comprising applying a composition of the invention to said pest or to the locus of said pest.

In yet a further aspect there is provided the use of an aromatic phosphate ester of formula (I), as an adjuvant in an agrochemical composition comprising an agrochemically active ingredient, for increasing the biological activity of said agrochemically active ingredient.

In yet a further aspect there is provided a method of making an agrochemical composition as described herein, comprising combining an active ingredient, a surfactant and an aromatic ester of formula (I).

In yet a further aspect there is provided a method of treatment or prevention of a fungal infection in a plant comprising applying a composition comprising
i. an fungicidal active ingredient;
ii. a surfactant;
iii. an aromatic phosphate ester of formula (I).

The term aromatic phosphate ester as used herein with reference to compounds of formula (I) includes reference to individual isomers of specific compounds, isomeric mixtures of specific compounds, and mixtures of more than one specific compound of formula (I). Accordingly, compositions of the invention may comprise one or more compound of formula (I) as defined herein.

Alkyl groups and moieties are straight or branched chains, and unless explicitly stated to the contrary, are unsubstituted. Examples of suitable alkyl groups for use in the invention include straight and branched-chain heptyl, octyl, nonyl, decyl, undecyl, dodecyl, tridecyl, tetradecyl, pentadecyl, hexadecyl, heptadecyl, octadecyl, nonadecyl and eicosyl groups.

Preferences for individual substituents are stated below and may be combined as desired unless otherwise stated.

In preferred embodiments R¹ and/or R² is phenyl and R³ is C₈-C₁₀ alkyl and more preferably R³ is 2-ethylhexyl or isodecyl.

The skilled person will appreciate that compounds of formula (I) may exist in different isomeric forms and it is contemplated that the use of individual isomers as well as mixtures thereof fall within the scope of the invention.

Preferred examples of specific compounds of formula (I), which may be used in the invention include isodecyl diphenyl phosphate (CAS registry No. 29761-21-5, available from Supresta, European Regional Sales Office, Hoefseweg 1, PO box 2501, 3800 GB Amersfoort, Netherlands, under the tradename Phosflex®390), 2-ethylhexyldiphenyl phosphate (CAS registry No. 1241-94-7; available from Supresta, *supra,* under the tradename Phosflex®362).

As stated previously, the present invention is based on the unexpected finding that compounds of formula (I) are particularly good adjuvants, in particular in agrochemical formulations. Accordingly, such adjuvants may be combined with an active ingredient, which is an agrochemical, in order to form an agrochemical composition. The present invention extends to such agrochemical compositions as well as to a method of making such an agrochemical composition, wherein said method comprises combining a compound of formula (I) with an agrochemical. The noun "agrochemical" as used herein incorporates herbicides, insecticides, nematicides, molluscicides, funcgicides, plant growth regulators, and safeners.

Suitable herbicides include bicyclopyrone, mesotrione, fomesafen, tralkoxydim, napropamide, amitraz, propanil, pyrimethanil, dicloran, tecnazene, toclofos methyl, flamprop M, 2,4-D, MCPA, mecoprop, clodinafop-propargyl, cyhalofop-butyl, diclofop methyl, haloxyfop, quizalofop-P, indol-3-ylacetic acid, 1-naphthylacetic acid, isoxaben, tebutam, chlorthal dimethyl, benomyl, benfuresate, dicamba, dichlobenil, benazolin, triazoxide, fluazuron, teflubenzuron, phenmedipham, acetochlor, alachlor, metolachlor, pretilachlor, thenylchlor, alloxydim, butroxydim, clethodim, cyclodim, sethoxydim, tepraloxydim, pendimethalin, dinoterb, bifenox, oxyfluorfen, acifluorfen, fluoroglycofen-ethyl, bromoxynil, ioxynil, imazamethabenz-methyl, imazapyr, imazaquin, imazethapyr, imazapic, imazamox, flumioxazin, flumiclorac-pentyl, picloram, amodosulfuron, chlorsulfuron, nicosulfuron, rimsulfuron, triasulfuron, triallate, pebulate, prosulfocarb, molinate, atrazine, simazine, cyanazine, ametryn, prometryn, terbuthylazine, terbutryn, sulcotrione, isoproturon, linuron, fenuron, chlorotoluron and metoxuron. The invention is particularly suitable for application in combination with the herbicides employed in the Examples described herein. Particularly preferred classes of herbicide are sulfonylurea herbicides (especially nicosulfuron), nitrophenyl ether herbicides (especially fomesafen), benzoylcyclohexanedione herbicides (especially mesotrione), and phenylpyrazole herbicides (especially pinoxaden).

Suitable fungicides include isopyrazam, mandipropamid, azoxystrobin, trifloxystrobin, kresoxim methyl, famoxadone, metominostrobin and picoxystrobin, cyprodanil, carbendazim, thiabendazole, dimethomorph, vinclozolin, iprodione, dithiocarbamate, imazalil, prochloraz, fluquinconazole, epoxiconazole, flutriafol, azaconazole, bitertanol, bromuconazole, cyproconazole, difenoconazole, hexaconazole, paclobutrazole, propiconazole, tebuconazole, triadimefon, trtiticonazole, fenpropimorph, tridemorph, fenpropidin, mancozeb, metiram, chlorothalonil, thiram, ziram, captafol, captan, folpet, fluazinam, flutolanil, carboxin, metalaxyl, bupirimate, ethirimol, dimoxystrobin, fluoxastrobin, orysastrobin, metominostrobin and prothioconazole. Particularly preferred classes of fungicides are pyrazole fungicides (especially isopyrazam) and conazole fungicides (especially cyproconazole).

Suitable insecticides include thiamethoxam, imidacloprid, acetamiprid, clothianidin, dinotefuran, nitenpyram, fipronil, abamectin, emamectin, bendiocarb, carbaryl, fenoxycarb, isoprocarb, pirimicarb, propoxur, xylylcarb, asulam, chlorpropham, endosulfan, heptachlor, tebufenozide, bensultap, diethofencarb, pirimiphos methyl, aldicarb, methomyl, cyprmethrin, bioallethrin, deltamethrin, lambda cyhalothrin, cyhalothrin, cyfluthrin, cyantraniliprole, fenvalerate, imiprothrin, permethrin and halfenprox. The avermectin class of insecticides is particularly preferred. The invention is particularly suitable for application in combination with the following insecticides: abamectin, cyantraniliprole, and thiomethoxam, 2-ethylhexyldiphenyl phosphate is a particularly effective adjuvant for these three insecticides.

Suitable plant growth regulators include paclobutrazole and 1-methylcyclopropene.

Suitable safeners include benoxacor, cloquintocet-mexyl, cyometrinil, dichlormid, fenchlorazole-ethyl, fenclorim, flurazole, fluxofenim, mefenpyr-diethyl, MG-191, naphthalic anhydride, oxabetrinil and N-(2-methoxybenzoyl)-4-[(methylaminocarbonyl) amino]benzenesulfonamide.

Of course, the various editions of The Pesticide Manual [especially the 14th and 15th editions] also disclose details of agrochemicals, any one of which may suitably be used with the present invention.

The skilled person will appreciate that compositions of the invention may comprise one or more of the agrochemicals as described above.

The skilled person will appreciate that compositions of the invention may be in the form of a ready-to-use formulation (e.g. as a water-based formulation suitable for spray application) or in concentrate form suitable for further dilution by the end user, and the concentration of agrochemical and compound of formula (I) will be adjusted accordingly. Compounds of formula (I) may be manufactured and/or formulated separately, and in order to be used as an adjuvant these may be added to a separate agrochemical formulation at a subsequent stage, typically immediately prior to use.

Compositions of the invention will typically comprise the agrochemical in an amount that is recommended in the art. Generally the agrochemical will be present at a concentration of about 0.001 % to 90% w/v. The skilled man will appreciate that compositions of the invention may be in the form of a ready-to-use formulation or in concentrate form suitable for further dilution by the end user, and the concentration of agrochemical and compound of formula (I) will be adjusted accordingly. In concentrated form, compositions of the invention typically comprise agrochemical at 5 to 75% w/v, more preferably 10 to 50% w/v agrochemical. Ready-to-use compositions of the invention will typically comprise from 0.0001% to 1% w/v, more preferably from 0.001% to 0.5% w/v, and more preferably still from 0.001% to 0.1% w/v agrochemical.

Typically a compound of formula (I) will comprise from about 0.0005% to about 90% v/v of the total composition. When in concentrated form, compositions of the invention typically comprise a compound of formula (I) from 1% to 80% v/v, preferably from 5% to 60% v/v and more preferably from 10% v/v to 40% v/v. Ready to use compositions of the invention typically comprise a compound of formula (I) from about 0.05% to about 5% v/v of the total composition, preferably from about 0.05% to 2% v/v of the total composition, more preferably from about 0.1% to about 1% v/v of the total composition, and more preferably still from about 0.1 % to about 0.5% v/v of the total composition. In specific embodiments the aromatic ester will be included at concentrations of 0.05%, 0.1%, 0.2%, 0.25%, 0.3%, 0.4% or 0.5% v/v of the total composition. Compounds of formula (I) may be manufactured and/or formulated separately, and in order to be used as an adjuvant these may be added to a separate agrochemical formulation at a subsequent stage, typically immediately prior to use.

Compositions of the invention may be formulated in any suitable manner known to the man skilled in the art. As mentioned above, in one form a composition of the invention is a formulation concentrate which may be diluted or dispersed (typically in water) by an end-user (typically a farmer) in a spray tank prior to application.

Additional formulation components may be incorporated alongside compounds of formula (I) or compositions of the invention in such formulations. Such additional components include, for example, adjuvants, surfactants, emulsifiers, and solvents, and are well known to the man skilled in the art: standard formulation publications disclose such formulation components suitable for use with the present invention (for example, Chemistry and Technology of Agrochemical Formulations, Ed. Alan Knowles, published by Kluwer Academic Publishers, The Netherlands in 1998; and Adjuvants and Additives: 2006 Edition by Alan Knowles, Agrow Report DS256, published by Informa UK Ltd, December 2006). Further standard formulation components suitable for use with the present invention are disclosed in WO2009/130281A1 (see from page 46, line 5 to page 51, line 40).

Thus, compositions of the present invention may also comprise one or more surfactants or dispersing agents to assist the emulsification of the agrochemical on dispersion or dilution in an aqueous medium (dispersant system). The emulsification system is present primarily to assist in maintaining the emulsified agrochemical in water. Many individual emulsifiers, surfactants and mixtures thereof suitable for forming an emulsion system for an agrochemical are known to those skilled in the art and a very wide range of choices is available. Typical surfactants that may be used to form an emulsifier system include those containing ethylene oxide, propylene oxide or ethylene oxide and propylene oxide; aryl or alkylaryl sulphonates and combinations of these with either ethylene oxide or propylene oxide or both; carboxylates and combinations of these with either ethylene oxide or propylene oxide or both. Polymers and copolymers are also commonly used. Preferred surfactants are polyvinyl alcohols and ethylene glycol-propylene glycol block copolymers, and combinations thereof.

Compositions of the present invention may also include solvents, which may have a range of water solubilitites. Oils with very low water solubilities may be added to the solvent of the present invention for assorted reasons such as the provision of scent, safening, cost reduction, improvement of the emulsification properties and alteration of the solubilising power. Solvents with higher water solubility may also be added for various reasons, for instance to alter the ease with which the formulation emulsifies in water, to improve the solubility of the pesticide or of the other optional additives in the formulation, to change the viscosity of the formulation or to add a commercial benefit.

Other optional ingredients which may be added to the formulation include for example, colourants, scents, and other materials which benefit a typical agrochemical formulation.

Compositions of the invention may formulated for example, as emulsion or dispersion concentrates, emulsions in water or oil, as microencapsulated formulations, aerosol sprays or fogging formulations; and these may be further formulated into granular materials or powders, for example for dry application or as water-dispersible formulations. Preferably compositions of the invention will be formulated as, or comprised by an emulsion concentrate (EC), an emulsion in water (EW), a microcapsule formulation (CS), a suspension of particles with an emulsion of (suspoemulsion; SE), a dispersion concentrate (DC) or an oil suspension (OD).

Compositions of the invention may be used to control pests. The term "pest" as used herein includes insects, fungi, molluscs, nematodes, and unwanted plants. Thus, in order to control a pest a composition of the invention may be applied directly to the pest, or to the locus of a pest.

Compositions of the invention also have utility in the seed treatment arena, and thus may be applied as appropriate to seeds.

The skilled man will appreciate that the preferences described above with respect to various aspects and embodiments of the invention may be combined in whatever way is deemed appropriate, within the scope of the claims.

Various aspects and embodiments of the present invention will now be illustrated in more detail by way of example.

### EXAMPLES

Unless otherwise stated within a specific Example, all aromatic phosphate esters employed were initially formulated as 20% w/w emulsions containing 2% w/w Gohsenol®GLO3 (a polyvinyl alcohol, Nippon Gohsei, Hull, UK) and 2% Pluronic® PE10500 (an ethylene glycol-propylene glycol block copolymer BASF Aktiengesellschaft, Ludwighsafen, Germany) as surfactants.

### Example 1 Use of aromatic phosphate esters as adjuvants in agrochemical compositions of isopyrazam

The efficacy of the following aromatic phosphate esters, tricresyl phosphate and Phosflex®362 (2-ethylhexyl diphenyl phosphate) as adjuvants in compositions comprising isopyrazam was tested and compared to the standard formulations (both EC and SC) of the fungicide, which lack this type of adjuvant, as well as to the efficacy of tris-(2-ethylhexyl)phosphate as an adjuvant.

Wheat plants were inoculated with the fungus *Septoria tritici.* Five days after inoculation the plants were sprayed with a diluted emulsion concentrate or suspension concentrate formulation of the fungicide isopyrazam at rates of 3, 10, 30 and 100 mg of the fungicide per litre of spray solution, using a laboratory track sprayer which delivered the spray at a rate of 200 litres per hectare. Spray tests were also carried out with diluted suspension concentrate additionally comprising each of the adjuvants described above. These adjuvants were added to the spray solution at a rate of 0.2 % v/v, based on the quantity of spray liquor. The leaves of the plants were assessed visually 14 days after the spray application and the damage was expressed as the percentage of the leaf area infected. Each spray test was replicated three times across the four application rates and the modelled means of these results are shown in Table 1 below.

**Table 1 Mean % infection of wheat plants with S. tritici treated with isopyrazam in the presence and absence of phosphate ester adjuvants. A standard Tukey HSD test was carried out to assess whether each result was statistically different from the other results and this is expressed as a letter: tests with the same letter are not statistically different (p<0.05).**

| **Treatment** | **Mean % Infection** |
|---|---|
| Blank | 22.2 A |
| Standard Isopyrazam SC | 10.8 B |
| Standard Isopyrazam SC + Tricresyl phosphate | 11.3 B |
| Standard Isopyrazam SC + Tris-(2ethyl-hexyl)phosphate | 11.1 B |
| Standard Isopyrazam SC + Phosflex®362 | 4.8 C |
| Standard Isopyrazam EC | 8.6 B |

As can be seen from Table 1 the aromatic phosphate ester adjuvants were as efficacious as the standard suspension concentrate and emulsion concentrate formulations of izopyrazam. Furthemore, Phosflex® 362 was more efficacious as an adjuvant than any of the other compounds tested.

### Example 2 Use of aromatic phosphate esters as adjuvants in agrochemical compositions of cyproconazole

The efficacy of tricresyl phosphate and Phosflex®362 (2-ethylhexyl diphenyl phosphate) as adjuvants in compositions comprising cyproconazole was tested and compared to the standard SC formulation of the fungicide, which lacks this type of adjuvant, as well as to the efficacy of tris-(2-ethylhexyl)phosphate as an adjuvant.

As in Example 1, wheat plants were inoculated with the fungus *Septoria tritici.* Five days after inoculation the plants were sprayed with a diluted suspension concentrate formulation of the fungicide cyproconazole at rates of 3, 10, 30 and 100 mg of the fungicide per litre of spray solution, using a laboratory track sprayer which delivered the spray at a rate of 200 litres per hectare. Spray tests were also carried out with diluted suspension concentrate additionally comprising each of the phosphate ester adjuvants described above. These adjuvants were added to the spray solution at a rate of 0.2 % v/v, based on the quantity of spray liquor. The leaves of the plants were assessed visually 14 days after the spray application and the damage was expressed as the percentage of the leaf area infected. Each spray test was replicated three times across the four application rates and the modelled means of these results are shown in Table 2 below.

**Table2 Mean % infection of wheat plants with S. tritici treated with cyproconazole in the presence and absence of phosphate ester adjuvants. A standard Tukey HSD test was carried out to assess whether each result was statistically different from the other results and this is expressed as a letter: tests with the same letter are not statistically different (p<0.05).**

| **Treatment** | **Mean % Infection** |
|---|---|
| Blank | 23.1 A |
| Standard cyproconazole SC | 9.1 B |
| Standard cyproconazole SC + Tricresylphosphate | 7.4 B |
| Standard cyproconazole SC + Tris(2-ethylhexyl)phosphate | 3.8 C |
| Standard cyproconazole SC + Phosflex®362 | 3.4 C |

As can be seen from Table 2 the aromatic phosphate ester adjuvants were as efficacious as the standard suspension concentrate formulation of cyproconazole, and again, Phosflex®362 performed best as an adjuvant out of the compounds tested.

### Example 3 Use of aromatic phosphate esters as adjuvants in agrochemical compositions of nicosulfuron

The efficacy of the aromatic phosphate esters tricresyl phosphate, Phosflex®362 (2-ethylhexyl diphenyl phosphate) and triphenyl phosphate were tested in a glasshouse against four weed species using the herbicide nicosulfuron. An agrochemical composition was prepared containing 0.5 % v/v of the adjuvant Atplus® 411 F in a track sprayer, and was applied at a volume of 200 litres per hectare. The other adjuvants were tested at a arte of 0.2 % v/v. Nicosulfuron was applied at a rate of either 30 or 60 grams of pesticide per hectare to weeds which had been grown to the 1.3 or 1.4 leaf stage. The weed species were *Chenopodium album* (CHEAL), *Abutilon theophrasti* (ABUTH), *Setaria viridis* (SETVI) and *Digitaria sanguinalis* (DIGSA).

Each spray test was replicated three times. The efficacy of the herbicide was assessed visually and expressed as a percentage of the leaf area killed. Samples were assessed at time periods of 14 and 21 days following application. The results shown in Table 3 below are mean averages over the two rates of nicosulfuron, three replicates, four weed species and the two assessment timings, and are compared to the efficacy of nicosulfuron in the absence of adjuvant and nicosulfuron in the presence of the known tank mix adjuvant Atplus®411 F.

The results show all three aromatic phosphate esters were efficacious as adjuvants, with tricresylphosphate and 2-ethylhexyl diphenyl phosphate (Phosflex®362) performing particularly well.

**Table 3 Mean percentage kill results for nicosulfuron in the presence and absence of tricresyl phosphate, Phosflex®362, triphenylphosphate, or Atplus®411F. A standard Tukey HSD test was carried out to assess whether each result was statistically different from the other results and this is expressed as a letter: tests with the same letter are not statistically different (p<0.05).**

| **Treatment** | **Mean across species** |
|---|---|
| Nicosulfuron +Atplus®411F | 66.6 A |
| Nicosulfuron + tricresylphosphate | 63.2 AB |
| Nicosulfuron +Phosflex®362 | 63.0 AB |
| Nicosulfuron + triphenylphosphate | 59.1 B |
| Nicosulfuron | 42.5 C |

### Example 4 Use of aromatic phosphate esters as adjuvants in agrochemical compositions of pinoxaden

The efficacy of the aromatic phosphate esters tricresyl phosphate, Phosflex®362 (2-ethylhexyl diphenyl phosphate) and triphenyl phosphate were tested in a glasshouse against four weed species using the herbicide pinoxaden. An agrochemical composition was prepared containing 0.5 % v/v of the adjuvant TEHP in a track sprayer and was applied at a volume of 200 litres per hectare. The other adjuvants were tested at a rate of 0.2 % v/v. Pinoxaden was applied at either 7.5 or 15 grams per hectare on each of the weed species. The weed species and their growth stage at spraying were *Alopecurus myosuroides* (ALOMY; growth stage 13), *Avena fatua* (AVEFA; growth stage 12); *Lolium perenne* (LOLPE; growth stage 13), *Setaria viridis* (SETVI; growth stage 14).

Each spray test was replicated three times. The efficacy of the herbicide was assessed visually and expressed as a percentage of the leaf area killed. Samples were assessed at time periods of 14 and 21 days following application. The results shown in Table 4 below are mean averages over the two rates of pinoxaden, three replicates, four weeds and the two assessment timings. The results were compared to the efficacy of pinoxaden in the absence of an adjuvant and pinoxaden in the presence of either TEHP (tris-2-ethylhexyl phosphate) or acetyl tributyl citrate.

**Table 4 Mean percentage kill results for pinoxaden in the presence and absence of tricresyl phosphate, Phosflex®362, triphenyl phosphate, TEHP, or acetyl tributyl citrate. A standard Tukey HSD test was carried out to assess whether each result was statistically different from the other results and this is expressed as a letter: tests with the same letter are not statistically different (p<0.05).**

| **Treatment** | **Mean across species** |
|---|---|
| Pinoxaden + TEHP | 69.8 A |
| Pinoxaden + Phosflex®362 | 68.8 A |
| Pinoxaden + tricresylphosphate | 49.9 B |
| Pinoxaden + acetyl tributyl citrate | 43.5 B |
| Pinoxaden + triphenyl phosphate | 40.3 B |
| Pinoxaden | 16.0 C |

The results show that all aromatic phosphate esters are efficacious as adjuvants for pinoxaden.

### Example 5 Use of aromatic phosphate esters as adjuvants in agrochemical compositions of mesotrione

The efficacy of the aromatic phosphate esters tricresyl phosphate, Phosflex®362 (2-ethylhexyl diphenyl phosphate) and triphenyl phosphate as adjuvants were tested in a glasshouse against four weed species using the herbicide mesotrione. An agrochemical composition was prepared containing 0.5 % v/v of the adjuvant Turbocharge ® with the test comopund in a track sprayer and was applied at a volume of 200 litres per hectare. The other adjuvants were tested at a rate of 0.2 % v/v. Mesotrione was applied at either 60 or 120 grams per hectare on weeds which had been grown to the 1.3 or 1.4 leaf stage. The weed species and their growth stage at spraying were *Polygonum convolvulus* (POLCO; growth stage 13), *Brachiaria platyphylla* (BRAPL; growth stage 13), *Digitaria sanguinalis* (DIGSA; growth stage 13) and *Amaranthus tuberculatus* (AMATU; growth stage 13).

Each spray test was replicated three times. The efficacy of the herbicide was assessed visually and expressed as a percentage of the leaf area killed. Samples were assessed at time periods of 7, 14 and 21 days following application. The results shown below in Table 5 are mean averagesover the two rates of mesotrione, three replicates, four weeds and the three assessment timings. The results were compared to the efficacy of mesotrione in the absence of an adjuvant as well as in the presence of the commercial tank-mix adjuvant Turbocharge® , tested at 0.5 % v/v and the adjuvant tributyl citrate applied at 0.2% v/v.

**Table 5 Mean percentage kill results for mesotrione in the presence and absence of tricresyl phosphate, Phosflex®362, triphenylphosphate, Turbocharge® or tributyl citrate. A standard Tukey HSD test was carried out to assess whether each result was statistically different from the other results and this is expressed as a letter: tests with the same letter are not statistically different (p<0.05).**

| **Treatment** | **Mean across species** |
|---|---|
| Mesotrione + Turbocharge® | 50.8 A |
| Mesotrione + Phosflex®362 | 50.8 A |
| Mesotrione + tricresylphosphate | 49.2 A |
| Mesotrione + triphenylphosphate | 48.4 A |
| Mesotrione + acetyl tributyl citrate | 48.0 A |
| Mesotrione | 34.0 A |

The results show all aromatic phosphate esters are effective as adjuvants for mesotrione.

### Example 6 Use of aromatic phosphate esters as adjuvants in agrochemical compositions of fomesafen

The efficacy of the aromatic phosphate esters tricresyl phosphate, Phosflex®362 (2-ethylhexyl diphenyl phosphate) and triphenyl phosphate as adjuvants were tested in a glasshouse against four weed species using the herbicide fomesafen. An agrochemical composition was prepared containing 0.5 % v/v of the adjuvant Turbocharge ® in a track sprayer and was applied at a volume of 200 litres per hectare. The other adjuvants were tested at a rate of 0.2 % v/v. Fomesafen was applied at a rate of either 60 or 120 grams per hectare on weeds which had been grown to the 1.3 or 1.4 leaf stage. The weed species and their growth stage at spraying were *Chenopodium album* (CHEAL;growth stage 14), *Abutilon theophrasti* (ABUTH; growth stage 12), *Setaria viridis* (SETVI; growth stage 13), and *Xanthium strumarium* (XANST; growth stage 12).

Each spray test was replicated three times. The efficacy of the herbicide was assessed visually and expressed as a percentage of the leaf area killed. Samples were assessed at time periods of 7, 14 and 21 days following application. The results shown below in Table 6 are mean averages over the two rates of fomesafen, three replicates, four weeds and the three assessment timings. The results were compared to the efficacy of fomesafen in the absence of an adjuvant as well as in the presence of the commercial tank-mix adjuvant Turbocharge® and the adjuvant tributyl citrate.

**Table 6 Mean percentage kill results for fomesagen in the presence and absence of Turbocharge®, Phosflex®362, acetyl tributyl citrate, tricresylphosphate, or triphenyl phosphate. A standard Tukey HSD test was carried out to assess whether each result was statistically different from the other results and this is expressed as a letter: tests with the same letter are not statistically different (p<0.05).**

| **Treatment** | **Mean across species** |
|---|---|
| Fomesafen + Turbocharge® | 35.2 A |
| Fomesafen + Phosflex®362 | 33.0 AB |
| Fomesafen + acetyl tributyl citrate | 31.7 AB |
| Fomesafen + tricresylphosphate | 29.9 AB |
| Fomesafen + triphenylphosphate | 29.0 B |
| Fomesafen | 14.3 C |

The results show all aromatic phosphate esters were effective as adjuvants for fomesafen.

### Example 7 Use of an aromatic phosphate ester adjuvant in an agrochemical composition containing abamectin

The efficacy of the aromatic phosphate ester Phosflex® 362 (2-ethylhexyl diphenyl phosphate) as an adjuvant in a composition containing abamectin was tested and compared to the efficacy of an abamectin composition without the Phosflex® 362 present, and to the efficacy of an abamectin composition containing triethyl phosphate. The Phosflex® 362 and the triethyl phosphate were present at 0.14 % v/v in the abamectin compositions. The surfactants tristyrylphenol ethoxylate phosphate ester, sodium salt and tristyrylphenol ethoxylate were present in all the abamectin compositions tested.

Two week old French bean *(Phaseolus vulgaris)* plants were infested with a mixed population of two spotted spider mite *Tetranychus urticae.* One day after infestation the plants were treated with the test compositions, with a track sprayer from the top with a rate of 200 litres per hectare. Plants were incubated in the greenhouse for 10 days and the evaluation was done on mortality against Larva and Adults, just on the lower side (untreated) of the leaves. Each experiment was replicated twice and the results were averaged. The mortality against Larva and Adults was then averaged. In the control experiment the beans were sprayed with water and no mortality was observed. The beans were sprayed with phosphate ester compositions without abamectin present, containing 0.14 % v/v Phosflex® 362 or 0.14 % v/v triethyl phosphate and no mortality was observed in each case.

**Table 7 % Mortality of Tetranychus urticae treated with abamectin in the presence and absence of an aromatic phosphate ester adjuvant.**

| | % mortality of *Tetranychus urticae* at different abamectin concentrations (ppm) | | |
|---|---|---|---|
| Treatment | 12.5 ppm abamectin | 3 ppm abamectin | 0.8 ppm abamectin |
| Abamectin | 50 | 20 | 0 |
| Abamectin + Phosflex® 362 | 100 | 99 | 0 |
| Abamectin + triethyl phosphate | 62 | 10 | 0 |

As can be seen from Table 7 the inclusion of the aromatic phosphate ester Phosflex® 362 as an adjuvant for abamectin provided more effective control of *Tetranychus urticae* than the treatment containing abamectin with no adjuvant present. It can also be seen that Phosflex® 362 was considerably more effective than the alkyl phosphate ester triethyl phosphate.

## Claims

1. An agrochemical composition wherein the composition is an emulsion concentrate (EC), an emulsion in water (EW), a microcapsule formulation (CS), dispersion concentrate (DC), suspension of particles in an emulsion (SE), or a suspension of particles in oil (OD) comprising:
i. an agrochemical active ingredient;
ii. a surfactant;
iii. an aromatic phosphate ester of formula (I) 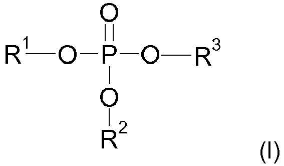 wherein
R¹ is phenyl or phenyl substituted with one, two or three groups independently selected from a C₁-C₄ branched chain alkyl group or a C₁-C₄ straight chain alkyl group, R² is phenyl or phenyl substituted with one, two or three groups independently selected from a C₁-C₄ branched chain alkyl group or a C₁-C₄ straight chain alkyl group, and R³ is C₇-C₂₀ alkyl.

2. A liquid agrochemical composition comprising:
i. an agrochemical active ingredient;
ii. a surfactant;
iii. from 0.05% to 5% v/v of an aromatic phosphate ester of formula (I) 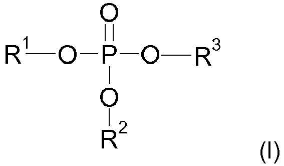
wherein R¹ is phenyl or phenyl substituted with one, two or three groups independently selected from a C₁-C₄ branched chain alkyl group or a C₁-C₄ straight chain alkyl group,
R² is phenyl or phenyl substituted with one, two or three groups independently selected from a C₁-C₄ branched chain alkyl group or a C₁-C₄ straight chain alkyl group, and
R³ is C₇-C₂₀ alkyl.

3. An agrochemical composition according to claim 1 or 2 wherein R¹ and R² are phenyl and R³ is C₈-C₁₀ alkyl.

4. An agrochemical composition according to any one of claims 1 to 3, wherein the aromatic phosphate ester is selected from the group consisting of: 2-ethylhexyldiphenyl phosphate and isodecyl diphenyl phosphate.

5. An agrochemical composition according to any one of the preceding claims wherein the active ingredient is present at a concentration in the range from 0.001% to 90% w/v.

6. An agrochemical composition according to anyone of the preceding claims wherein the active ingredient is selected from the group consisting of: bicyclopyrone, mesotrione, fomesafen, tralkoxydim, napropamide, amitraz, propanil, pyrimethanil, dicloran, tecnazene, toclofos methyl, flamprop M, 2,4-D, MCPA, mecoprop, clodinafop-propargyl, cyhalofop-butyl, diclofop methyl, haloxyfop, quizalofop-P, indol-3-ylacetic acid, 1-naphthylacetic acid, isoxaben, tebutam, chlorthal dimethyl, benomyl, benfuresate, dicamba, dichlobenil, benazolin, triazoxide, fluazuron, teflubenzuron, phenmedipham, acetochlor, alachlor, metolachlor, pretilachlor, thenylchlor, alloxydim, butroxydim, clethodim, cyclodim, sethoxydim, tepraloxydim, pendimethalin, dinoterb, bifenox, oxyfluorfen, acifluorfen, fluoroglycofen-ethyl, bromoxynil, ioxynil, imazamethabenz-methyl, imazapyr, imazaquin, imazethapyr, imazapic, imazamox, flumioxazin, flumiclorac-pentyl, picloram, amodosulfuron, chlorsulfuron, nicosulfuron, rimsulfuron, triasulfuron, triallate, pebulate, prosulfocarb, molinate, atrazine, simazine, cyanazine, ametryn, prometryn, terbuthylazine, terbutryn, sulcotrione, isoproturon, linuron, fenuron, chlorotoluron, metoxuron, isopyrazam, mandipropamid, azoxystrobin, trifloxystrobin, kresoxim methyl, famoxadone, metominostrobin and picoxystrobin, cyprodanil, carbendazim, thiabendazole, dimethomorph, vinclozolin, iprodione, dithiocarbamate, imazalil, prochloraz, fluquinconazole, epoxiconazole, flutriafol, azaconazole, bitertanol, bromuconazole, cyproconazole, difenoconazole, hexaconazole, paclobutrazole, propiconazole, tebuconazole, triadimefon, trtiticonazole, fenpropimorph, tridemorph, fenpropidin, mancozeb, metiram, chlorothalonil, thiram, ziram, captafol, captan, folpet, fluazinam, flutolanil, carboxin, metalaxyl, bupirimate, ethirimol, dimoxystrobin, fluoxastrobin, orysastrobin, metominostrobin, prothioconazole, thiamethoxam, imidacloprid, acetamiprid, clothianidin, dinotefuran, nitenpyram, fipronil, abamectin, emamectin, bendiocarb, carbaryl, fenoxycarb, isoprocarb, pirimicarb, propoxur, xylylcarb, asulam, chlorpropham, endosulfan, heptachlor, tebufenozide, bensultap, diethofencarb, pirimiphos methyl, aldicarb, methomyl, cyprmethrin, bioallethrin, deltamethrin, lambda cyhalothrin, cyhalothrin, cyfluthrin, fenvalerate, imiprothrin, permethrin, halfenprox, paclobutrazole, 1-methylcyclopropene, benoxacor, cloquintocet-mexyl, cyometrinil, dichlormid, fenchlorazole-ethyl, fenclorim, flurazole, fluxofenim, mefenpyr-diethyl, MG-191, naphthalic anhydride, and oxabetrinil

7. An agrochemical composition according to anyone of the preceding claims wherein the composition is formulated as, or comprised by a microcapsule.

8. An agrochemical composition according to any one of the preceding claims, comprising at least one additional component selected from the group consisting of an agrochemical, an adjuvant, a surfactant, an emulsifier, and a solvent.

9. An agrochemical composition according to any one of the preceding claims which is a ready-to-use composition suitable for application to a crop, a pest or the locus of said pest.

10. Non-therapeutic use of an agrochemical composition as defined in any one of claims 1 to 9 to control pests.

11. Use of an aromatic phosphate ester as defined in any one of claims 1 to 4 as an adjuvant in an agrochemical composition comprising an agrochemically active ingredient, for increasing the biological activity of said agrochemically active ingredient.

12. A non-therapeutic method of controlling a pest, comprising applying a composition as defined in any one of claims 1 to 9 to said pest or the locus of said pest.

13. A method of treatment or prevention of a fungal infection in a plant comprising applying a composition comprising
i. an fungicidal active ingredient;
ii. a surfactant;
iii. an aromatic phosphate ester of formula (I) 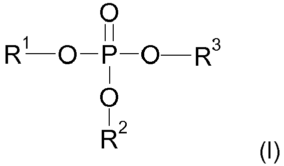 wherein
R¹ is phenyl or phenyl substituted with one, two or three groups independently selected from a C₁-C₄ branched chain alkyl group or a C₁-C₄ straight chain alkyl group,
R² is phenyl or phenyl substituted with one, two or three groups independently selected from a C₁-C₄ branched chain alkyl group or a C₁-C₄ straight chain alkyl group,
and R³ is C₇-C₂₀ alkyl.

14. A method of making an agrochemical composition comprising providing:
i. an agrochemically active ingredient;
ii. a surfactant;
iii. and an aromatic ester of formula (I) as defined in any one of claims 1 to 4;
and combining the agrochemically active ingredient, surfactant, and aromatic ester of i, ii and iii.

15. A method according to claim 14, wherein the agrochemical composition is as defined in claims 1 to 9.

## Patentansprüche

1. Agrochemische Zusammensetzung, wobei die Zusammensetzung ein Emulsionskonzentrat (EC), eine Emulsion in Wasser (EW), eine Mikrokapselformulierung (CS), ein Dispersionskonzentrat (DC), eine Suspension von Partikeln in einer Emulsion (SE) oder eine Suspension von Partikeln in Öl (OD) ist, umfassend:
i. einen agrochemischen Wirkstoff;
ii. ein oberflächenaktives Mittel;
iii. einen aromatischen Phosphatester der Formel (I) 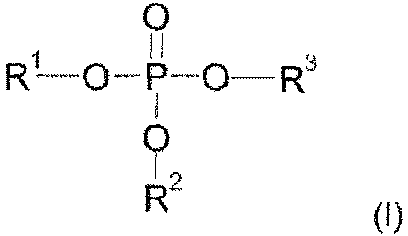 worin
R¹ Phenyl oder Phenyl ist, das mit einer, zwei oder drei Gruppen substituiert ist, die unabhängig voneinander aus einer verzweigtkettigen C₁-C₄-Alkylgruppe oder einer geradkettigen C₁-C₄-Alkylgruppe ausgewählt sind, R² Phenyl oder Phenyl ist, das mit einer, zwei oder drei Gruppen substituiert ist, die unabhängig voneinander aus einer verzweigtkettigen C₁-C₄-Alkylgruppe oder einer geradkettigen C₁-C₄-Alkylgruppe ausgewählt sind und R³ C₇-C₂₀-Alkyl ist.

2. Flüssige agrochemische Zusammensetzung, umfassend:
i. einen agrochemischen Wirkstoff;
ii. ein oberflächenaktives Mittel;
iii. von 0,05% bis 5% v/v eines aromatischen Phosphatesters der Formel (I) 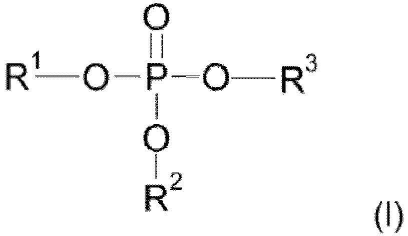 worin
R¹ Phenyl oder Phenyl ist, das mit einer, zwei oder drei Gruppen substituiert ist, die unabhängig voneinander aus einer verzweigtkettigen C₁-C₄-Alkylgruppe oder einer geradkettigen C₁-C₄-Alkylgruppe ausgewählt sind,
R² Phenyl oder Phenyl ist, das mit einer, zwei oder drei Gruppen substituiert ist, die unabhängig voneinander aus einer verzweigtkettigen C₁-C₄-Alkylgruppe oder einer geradkettigen C₁-C₄-Alkylgruppe ausgewählt sind und
R³ C₇-C₂₀-Alkyl ist.

3. Agrochemische Zusammensetzung nach Anspruch 1 oder 2, worin R¹ und R² Phenyl sind und R³ C₈-C₁₀-Alkyl ist.

4. Agrochemische Zusammensetzung nach einem der Ansprüche 1 bis 3, wobei der aromatische Phosphatester ausgewählt ist aus der Gruppe, bestehend aus: 2-Ethylhexyldiphenylphosphat und Isodecyldiphenylphosphat.

5. Agrochemische Zusammensetzung nach einem der vorhergehenden Ansprüche, wobei der Wirkstoff in einer Konzentration im Bereich von 0,001% bis 90% w/v vorliegt.

6. Agrochemische Zusammensetzung nach einem der vorhergehenden Ansprüche, wobei der Wirkstoff ausgewählt ist aus der Gruppe bestehend aus: Bicyclopyron, Mesotrion, Fomesafen, Tralkoxydim, Napropamid, Amitraz, Propanil, Pyrimethanil, Dicloran, Tecnazen, Toclofosmethyl, Flamprop M, 2,4-D, MCPA, Mecoprop, Clodinafop-Propargyl, Cyhalofop-Butyl, Diclofop-Methyl, Haloxyfop, Quizalofop-P, Indol-3-ylessigsäure, 1-Naphthylessigsäure, Isoxaben, Tebutam, Chlorthaldimethyl, Benomyl, Benfuresat, Dicamba, Dichlobenil, Benazolin, Triazoxid, Fluazuron, Teflubenzuron, Phenmedipham, Acetochlor, Alachlor, Metolachlor, Pretilachlor, Thenylchlor, Alloxydim, Butroxydim, Clethodim, Cyclodim, Sethoxydim, Tepraloxydim, Pendimethalin, Dinoterb, Bifenox, Oxyfluorfen, Acifluorfen, Fluorglycofen-Ethyl, Bromoxynil, Ioxynil, Imazamethabenzmethyl, Imazapyr, Imazaquin, Imazethapyr, Imazapic, Imazamox, Flumioxazin, Flumicloracpentyl, Picloram, Amodosulfuron, Chlorsulfuron, Nicosulfuron, Rimsulfuron, Triasulfuron, Triallat, Pebulat, Prosulfocarb, Molinat, Atrazin, Simazin, Cyanazin, Ametryn, Prometryn, Terbuthylazin, Terbutryn, Sulcotrion, Isoproturon, Linuron, Fenuron, Chlortoluron, Metoxuron, Isopyrazam, Mandipropamid, Azoxystrobin, Trifloxystrobin, Kresoximmethyl, Famoxadon, Metominostrobin und Picoxystrobin, Cyprodanil, Carbendazim, Thiabendazol, Dimethomorph, Vinclozolin, Iprodion, Dithiocarbamat, Imazalil, Prochloraz, Fluquinconazol, Epoxiconazol, Flutriafol, Azaconazol, Bitertanol, Bromuconazol, Cyproconazol, Difenoconazol, Hexaconazol, Paclobutrazol, Propiconazol, Tebuconazol, Triadimefon, Triticonazol, Fenpropimorph, Tridemorph, Fenpropidin, Mancozeb, Metiram, Chlorthalonil, Thiram, Ziram, Captafol, Captan, Folpet, Fluazinam, Flutolanil, Carboxin, Metalaxyl, Bupirimat, Ethirimol, Dimoxystrobin, Fluoxastrobin, Orysastrobin, Metominostrobin, Prothioconazol, Thiamethoxam, Imidacloprid, Acetamiprid, Clothianidin, Dinotefuran, Nitenpyram, Fipronil, Abamectin, Emamectin, Bendiocarb, Carbaryl, Fenoxycarb, Isoprocarb, Pirimicarb, Propoxur, Xylylcarb, Asulam, Chlorpropham, Endosulfan, Heptachlor, Tebufenozid, Bensultap, Diethofencarb, Pyimiphosmethyl, Aldicarb, Methomyl, Cypermethrin, Bioallethrin, Deltamethrin, Lambda-Cyhalothrin, Cyhalothrin, Cyfluthrin, Fenvalerat, Imiprothrin, Permethrin, Halfenprox, Paclobutrazol, 1-Methylcyclopropen, Benoxacor, Cloquintocet-Mexyl, Cyometrinil, Dichlormid, Fenchlorazol-Ethyl, Fenclorim, Flurazol, Fluxofenim, Mefenpyr-Diethyl, MG-191, Naphthalsäureanhydrid und Oxabetrinil.

7. Agrochemische Zusammensetzung nach einem der vorhergehenden Ansprüche, wobei die Zusammensetzung als eine Mikrokapsel formuliert ist oder diese umfasst.

8. Agrochemische Zusammensetzung nach einem der vorhergehenden Ansprüche, umfassend mindestens eine zusätzliche Komponente, ausgewählt aus der Gruppe, bestehend aus einer Agrochemikalie, einem Adjuvans, einem oberflächenaktiven Mittel, einem Emulgator und einem Lösungsmittel.

9. Agrochemische Zusammensetzung nach einem der vorhergehenden Ansprüche, die eine gebrauchsfertige Zusammensetzung ist, die für die Anwendung auf eine Feldfrucht, einen Schädling oder auf den Ort des Schädlings geeignet ist.

10. Nicht-therapeutische Verwendung einer agrochemischen Zusammensetzung nach einem der Ansprüche 1 bis 9 zur Bekämpfung von Schädlingen.

11. Verwendung eines aromatischen Phosphatesters nach einem der Ansprüche 1 bis 4 als Adjuvans in einer agrochemischen Zusammensetzung, die einen agrochemischen Wirkstoff umfasst, zur Erhöhung der biologischen Aktivität des agrochemischen Wirkstoffs.

12. Nicht-therapeutisches Verfahren zur Bekämpfung eines Schädlings, umfassend das Aufbringen einer Zusammensetzung nach einem der Ansprüche 1 bis 9 auf den Schädling oder den Ort des Schädlings.

13. Verfahren zur Behandlung oder Vorbeugung einer Pilzinfektion in einer Pflanze, umfassend das Aufbringen einer Zusammensetzung, umfassend
i. einen agrochemischen Wirkstoff;
ii. ein oberflächenaktives Mittel;
iii. einen aromatischen Phosphatester der Formel (I) 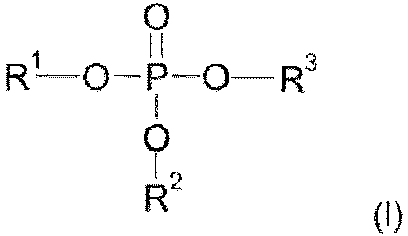 worin
R¹ Phenyl oder Phenyl ist, das mit einer, zwei oder drei Gruppen substituiert ist, die unabhängig voneinander aus einer verzweigtkettigen C₁-C₄-Alkylgruppe oder einer geradkettigen C₁-C₄-Alkylgruppe ausgewählt sind,
R² Phenyl oder Phenyl ist, das mit einer, zwei oder drei Gruppen substituiert ist, die unabhängig voneinander aus einer verzweigtkettigen C₁-C₄-Alkylgruppe oder einer geradkettigen C₁-C₄-Alkylgruppe ausgewählt sind und
R³ C₇-C₂₀-Alkyl ist.

14. Verfahren zur Herstellung einer agrochemischen Zusammensetzung, umfassend die Bereitstellung:
i. eines agrochemischen Wirkstoffs;
ii. eines oberflächenaktiven Mittels;
iii. und eines aromatischen Esters der Formel (I) nach einem der Ansprüche 1 bis 4;
und Kombinieren des agrochemischen Wirkstoffs, des oberflächenaktiven Mittels und des aromatischen Esters von i, ii und iii.

15. Verfahren nach Anspruch 14, wobei die agrochemische Zusammensetzung wie in den Ansprüchen 1 bis 9 definiert ist.

## Revendications

1. Composition agrochimique, où la composition est un concentré émulsionnable (EC), une émulsion dans l'eau (EW), une formulation de microcapsules (CS), un concentré de dispersion (DC), une suspension de particules dans une émulsion (SE) ou une suspension de particules dans l'huile (OD), comprenant :
i. un ingrédient actif agrochimique ;
ii. un agent tensioactif ;
iii. un ester de phosphate aromatique de formule (I) 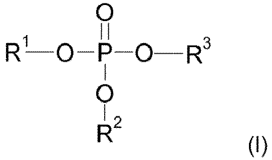 où
R¹ est phényle ou phényle substitué par un, deux ou trois groupements choisis indépendamment parmi un groupement alkyle à chaîne ramifiée en C₁-C₄ ou un groupement alkyle à chaîne linéaire en C₁-C₄, R² est phényle ou phényle substitué par un, deux ou trois groupements choisis indépendamment parmi un groupement alkyle à chaîne ramifiée en C₁-C₄ ou un groupement alkyle à chaîne linéaire en C₁-C₄, et R³ est C₇-C₂₀ alkyle.

2. Composition agrochimique liquide, comprenant :
i. un ingrédient actif agrochimique ;
ii. un agent tensioactif ;
iii. de 0,05% à 5% v/v d'un ester de phosphate aromatique de formule (I) 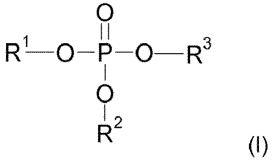 où
R¹ est phényle ou phényle substitué par un, deux ou trois groupements choisis indépendamment parmi un groupement alkyle à chaîne ramifiée en C₁-C₄ ou un groupement alkyle à chaîne linéaire en C₁-C₄,
R² est phényle ou phényle substitué par un, deux ou trois groupements choisis indépendamment parmi un groupement alkyle à chaîne ramifiée en C₁-C₄ ou un groupement alkyle à chaîne linéaire en C₁-C₄, et
R³ est C₇-C₂₀ alkyle.

3. Composition agrochimique selon la revendication 1 ou 2, dans laquelle R¹ et R² sont phényle et R³ est C₈-C₁₀ alkyle.

4. Composition agrochimique selon l'une quelconque des revendications 1 à 3, dans laquelle l'ester de phosphate aromatique est choisi dans le groupe constitué par le phosphate de 2-éthylhexyldiphényle et le phosphate d'isodécyldiphényle.

5. Composition agrochimique selon l'une quelconque des revendications précédentes, dans laquelle l'ingrédient actif est présent selon une concentration dans la plage allant de 0,001% à 90% p/v.

6. Composition agrochimique selon l'une quelconque des revendications précédentes, dans laquelle l'ingrédient actif est choisi dans le groupe constitué par : la bicyclopyrone, la mésotrione, le fomésafène, le tralcoxydime, le napropamide, l'amitraz, le propanil, le pyriméthanil, le dicloran, le tecnazène, le tolclofos-méthyle, le flamprop M, le 2,4-D, le MCPA, le mécoprop, le clodinafop-propargyle, le cyhalofop-butyle, le diclofop-méthyle, l'haloxyfop, le quizalofop-P, l'acide indol-3-ylacétique, l'acide 1-naphtylacétique, l'isoxabène, le tébutam, le chlorthal-diméthyle, le bénomyle, le benfurésate, le dicamba, le dichlobénil, la bénazoline, le triazoxide, le fluazuron, le téflubenzuron, le phenmédipham, l'acétochlor, l'alachlor, le métolachlor, le prétilachlor, le thénylchlor, l'alloxydime, le butroxydime, le cléthodime, le cyclodime, le séthoxydime, le tépraloxydime, la pendiméthaline, le dinoterb, le bifénox, l'oxyfluorfène, l'acifluorfène, le fluoroglycofène-éthyle, le bromoxynil, l'ioxynil, l'imazaméthabenz-méthyle, l'imazapyr, l'imazaquin, l'imazéthapyr, l'imazapic, l'imazamox, la flumioxazine, le flumiclorac-pentyle, le picloram, l'amidosulfuron, le chlorsulfuron, le nicosulfuron, le rimsulfuron, le triasulfuron, le triallate, le pébulate, le prosulfocarb, le molinate, l'atrazine, la simazine, la cyanazine, l'amétryne, la prométryne, la terbuthylazine, la terbutryne, la sulcotrione, l'isoproturon, le linuron, le fénuron, le chlorotoluron, le métoxuron, l'isopyrazam, le mandipropamide, l'azoxystrobine, la trifloxystrobine, le krésoxime-méthyle, la famoxadone, la métominostrobine et la picoxystrobine, le cyprodinil, le carbendazime, le thiabendazole, le diméthomorph, la vinclozoline, l'iprodione, le dithiocarbamate, l'imazalil, le prochloraz, le fluquinconazole, l'époxiconazole, le flutriafol, l'azaconazole, le bitertanol, le bromuconazole, le cyproconazole, le difénoconazole, l'hexaconazole, le paclobutrazole, le propiconazole, le tébuconazole, le triadiméfon, le triticonazole, le fenpropimorph, le tridémorph, la fenpropidine, le mancozeb, le métiram, le chlorothalonil, le thiram, le ziram, le captafol, le captan, le folpet, le fluazinam, le flutolanil, la carboxine, le métalaxyle, le bupirimate, l'éthirimol, la dimoxystrobine, la fluoxastrobine, l'orysastrobine, la métominostrobine, le prothioconazole, le thiaméthoxam, l'imidacloprid, l'acétamipride, la clothianidine, le dinotéfuran, le nitenpyram, le fipronil, l'abamectine, l'émamectine, le bendiocarb, le carbaryle, le fénoxycarb, l'isoprocarb, le pirimicarb, le propoxur, le xylylcarb, l'asulam, le chlorpropham, l'endosulfan, l'heptachlor, le tébufénozide, le bensultap, le diéthofencarb, le pirimiphos-méthyle, l'aldicarb, le méthomyle, la cyperméthrine, la bioalléthrine, la deltaméthrine, la lambda-cyhalothrine, la cyhalothrine, la cyfluthrine, le fenvalérate, l'imiprothrine, la perméthrine, l'halfenprox, le paclobutrazole, le 1-méthylcyclopropène, le bénoxacor, le cloquintocet-mexyle, le cyométrinil, le dichlormid, le fenchlorazole-éthyle, le fenclorim, le flurazole, le fluxofénim, le méfenpyr-diéthyle, le MG-191, l'anhydride naphtalique, et l'oxabétrinil.

7. Composition agrochimique selon l'une quelconque des revendications précédentes, où la composition est formulée sous forme de, ou comprise dans, une microcapsule.

8. Composition agrochimique selon l'une quelconque des revendications précédentes, comprenant au moins un composant supplémentaire choisi dans le groupe constitué par une substance agrochimique, un adjuvant, un agent tensioactif, un émulsifiant, et un solvant.

9. Composition agrochimique selon l'une quelconque des revendications précédentes, qui est une composition prête à l'emploi convenable pour une application à une culture, un nuisible ou au lieu où se développe ledit nuisible.

10. Utilisation non thérapeutique d'une composition agrochimique telle que définie selon l'une quelconque des revendications 1 à 9, pour le contrôle de nuisibles.

11. Utilisation d'un ester de phosphate aromatique tel que défini selon l'une quelconque des revendications 1 à 4, comme adjuvant dans une composition agrochimique comprenant un ingrédient actif sur le plan agrochimique, afin d'augmenter l'activité biologique dudit ingrédient actif sur le plan agrochimique.

12. Méthode non thérapeutique de contrôle d'un nuisible, comprenant l'application d'une composition telle que définie selon l'une quelconque des revendications 1 à 9 audit nuisible ou au lieu où se développe ledit nuisible.

13. Méthode de traitement ou de prévention d'une infection fongique chez une plante, comprenant l'application d'une composition comprenant
i. un ingrédient actif fongicide ;
ii. un agent tensioactif ;
iii. un ester de phosphate aromatique de formule (I) 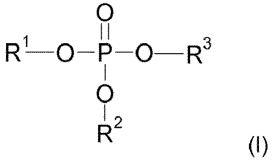 où
R¹ est phényle ou phényle substitué par un, deux ou trois groupements choisis indépendamment parmi un groupement alkyle à chaîne ramifiée en C₁-C₄ ou un groupement alkyle à chaîne linéaire en C₁-C₄,
R² est phényle ou phényle substitué par un, deux ou trois groupements choisis indépendamment parmi un groupement alkyle à chaîne ramifiée en C₁-C₄ ou un groupement alkyle à chaîne linéaire en C₁-C₄, et
R³ est C₇-C₂₀ alkyle.

14. Méthode de préparation d'une composition agrochimique, comprenant la fourniture
i. d'un ingrédient actif sur le plan agrochimique ;
ii. d'un agent tensioactif ;
iii. et d'un ester aromatique de formule (I) tel que défini selon l'une quelconque des revendications 1 à 4 ; et la combinaison de l'ingrédient actif sur le plan agrochimique, de l'agent tensioactif, et de l'ester aromatique de i, ii et iii.

15. Méthode selon la revendication 14, dans laquelle la composition agrochimique est telle que définie selon les revendications 1 à 9.
